# EUROPÄISCHE PATENTSCHRIFT

(11) **EP 2 680 503 B1**
(45) Veröffentlichungstag und Bekanntmachung des Hinweises auf die Patenterteilung: **06.06.2018**
(21) Anmeldenummer: 12174476.7
(22) Anmeldetag: 29.06.2012
(51) Int. Cl.: H04L 12/437, H04L 12/40

(54) **KOMMUNIKATIONSGERÄT FÜR EIN REDUNDANT BETREIBBARES INDUSTRIELLES KOMMUNIKATIONSNETZ UND VERFAHREN ZUM BETRIEB EINES KOMMUNIKATIONSGERÄTS**
Communication device for a redundant industrial communication network and method for operating a communication device
Appareil de communication pour un réseau de communication industriel fonctionnant de manière redondante et procédé de fonctionnement d'un appareil de communication

(43) Veröffentlichungstag der Anmeldung: 01.01.2014
(73) Patentinhaber: Siemens Aktiengesellschaft, 80333 München (DE)
(72) Erfinder: Angst, Hermann, 76199 Karlsruhe (DE); Lohmeyer, Joachim, 91161 Hilpoltstein (DE); Klotz, Dieter, 90768 Fürth (DE)

(56) Entgegenhaltungen:
- HUBERT KIRRMANN ET AL: "IEC 62439 PRP: Bumpless recovery for highly available, hard real-time industrial networks", 12TH IEEE INTERNATIONAL CONFERENCE ON EMERGING TECHNOLOGIES AND FACTORY AUTOMATION - 25-28 SEPT.2007 - PATRAS, GREECE, IEEE, PISCATAWAY, NJ, USA, 25. September 2007 (2007-09-25), Seiten 1396-1399, XP002572673, ISBN: 978-1-4244-0825-2 [gefunden am 2007-09-25]
- IEC ED - IEC: "Part 3: Parallel Redundancy Protocol (PRP) andHigh-availability Seamless Redundancy (HSR)", INTERNET CITATION, 31. Dezember 2010 (2010-12-31), Seiten 1-62, XP002680227, Gefunden im Internet: URL:http://lamspeople.epfl.ch/kirrmann/Pub s/IEC_61439-3/WG15-12-04d_62439-3_AMD_HK_1 01109.pdf [gefunden am 2012-07-18]
- N. Yadev; E.Kapadia: "IP and Ethernet Communication Technologies and Topologies for IED networks", Internet Internet Article, 20. Oktober 2010 (2010-10-20), Seiten 1-17, XP002688860, Internet Gefunden im Internet: URL:IP and Ethernet Communication Technologies and Topologies for IED networks [gefunden am 2012-12-06]

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten.

High-availability Seamless Redundancy (HSR) und Parallel Redundancy Protocol (PRP) sind im Standard IEC 62439-3 definiert und ermöglichen eine stoßfreie redundante Übertragung von Nachrichten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine solche Netzkomponente, die Telegramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR- oder PRP-Kommunikationsnetz mehrere HSR-Ringe verbinden oder Kommunikation zwischen HSR- und PRP-Netzsegmenten umsetzen. In diesem Fall wird die Netzkomponente als HSR-HSR-Koppler oder QuadBox bzw. HSR-PRP-Koppler bezeichnet.

Aus EP 2 165 474 A2 ist ein Verfahren zum Betreiben eines Netzes bekannt, das einen Switch sowie daran angeschlossene Netzinfrastrukturgeräte aufweist. Der Switch wird von einer Steuereinheit gesteuert. Eine zwischen den Switch und die Steuereinheit geschaltete Redundanzeinheit analysiert einen Datenstrom zwischen Switch und Steuereinheit und fügt in Abhängigkeit von einem Analyseergebnis Daten in den Datenstrom ein bzw. entfernt Daten aus dem Datenstrom.

In EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder einen leeren Datenrahmen an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

Aus EP 2 413 538 A1 ist ein Verfahren zur redundanten Kommunikation in einem Kommunikationssystem bekannt, das mehrere Kommunikationsnetze umfaßt. Die Kommunikationsnetze sind über zumindest einen Kopplungsknoten miteinander verbunden. Eine Rückübertragung von Daten, die aus einem ersten Kommunikationsnetz stammen, aus einem zweiten Kommunikationsnetz zurück in das erste Kommunikationsnetz wird auf Grund einer vor Datenübertragung definierten Information verhindert.

In der älteren europäischen Patentanmeldung mit dem Anmeldeaktenzeichen 12169919.3 ist ein Kommunikationsgerät für ein redundant betreibbares industrielles Kommunikationsnetz beschrieben, das mehrere erste und zweite Sende- und Empfangseinheiten umfaßt, die jeweils eine Schnittstelle für eine Netzverbindung des industriellen Kommunikationsnetzes aufweisen und jeweils einem von mehreren redundant betreibbaren Teilnetzen zugeordnet sind. Die ersten und zweiten Sende- und Empfangseinheiten sind über ein Koppelelement mit einer für alle redundant betreibbaren Teilnetze gemeinsamen Signalverarbeitungseinheit verbunden. Für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordneten Anschluß wird jeweils ein virtuelles lokales Netz eingerichtet. Die Signalverarbeitungseinheit leitet für sämtliche ersten und zweiten Sende- und Empfangseinheiten anhand einer Kennung des jeweiligen virtuellen lokalen Netzes zu sendende Nachrichten parallel an die jeweilige erste und zweite Sende- und Empfangseinheit weiter und detektiert empfangene redundante Nachrichten.

Der vorliegenden Erfindung liegt die Aufgabe zugrunde, ein leistungsfähiges und kostengünstiges Kommunikationsgerät zur zuverlässigen Ankopplung einer Vielzahl von HSR- bzw. PRP-Netzsegmenten an ein redundanzfreies Teilnetz oder an einen einfach angebundenen Netzknoten und ein Verfahren zum Betrieb eines solchen Kommunikationsgeräts anzugeben.

Das Dokument HUBERT KIRRMANN ET AL: "IEC 62439 PRP: Bumpless recovery for highly available, hard real-time industrial networks", 12TH IEEE INTERNATIONAL CONFERENCE ON EMERGING TECHNOLOGIES AND FACTORY AUTOMATION - 25-28 SEPT.2007 - PATRAS, GREECE, IEEE, PISCATAWAY, NJ, USA, 25. September 2007 beschreibt die Grundlagen und die Architektur von HSR und PRP Protokollen. Das Dokument IEC ED - IEC: "Part 3: Parallel Redundancy Protocol (PRP) and High-availability Seamless Redundancy (HSR)", 31. Dezember 2010 beschreibt IEC 62439 Standard. In der prinzipiellen Architektur eines PRP-Netzwerks ist jedes Endgerät (IED) mit zwei Netzwerk-Interfaces ausgestattet, über die es gleichzeitig in beide Netzwerke sendet bzw. daraus empfängt.

Diese Aufgabe wird erfindungsgemäß durch ein Kommunikationsgerät mit den in Anspruch 1 angegebenen Merkmalen und durch ein Verfahren mit den in Anspruch 12 angegebenen Merkmalen gelöst. Vorteilhafte Weiterbildungen der vorliegenden Erfindung sind in den abhängigen Ansprüchen angegeben.

Das Kommunikationsgerät umfaßt eine Mehrzahl erster und zweiter Sende- und Empfangseinheiten, die jeweils eine Schnittstelle für eine Netzverbindung eines redundanten Teilnetzes aufweisen. Dabei weisen jeweils eine erste Sende- und Empfangseinheit und eine dieser zugeordnete zweite Sende- und Empfangseinheit eine identische Netzadresse und einen identischen Geräteidentifikator auf. Bei dem Geräteidentifikator kann es sich beispielsweise um eine MAC-Adresse handeln. Mit den ersten und zweiten Sende- und Empfangseinheiten ist eine Signalverarbeitungseinheit verbunden, die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist. Des weiteren umfaßt die Redundanzbehandlungseinheit eine Filtereinheit, die für eine Detektion empfangener redundanter Nachrichten eingerichtet ist. Je nach Protokollebene kann eine Nachricht beispielsweise durch ein Datensegment, ein Datenpaket oder einen Datenrahmen repräsentiert werden.

Mit der Signalverarbeitungseinheit ist ein Koppelelement verbunden, über das ein einfach angebundener Netzknoten oder ein redundanzfreies Teilnetz mit der Signalverarbeitungseinheit verbunden ist. Das Koppelelement ist vorzugsweise ein Hochgeschwindigkeitsbus, über den beispielsweise weitere einfach angebundene Netzknoten oder redundanzfreie Teilnetze mit der Signalverarbeitungseinheit verbunden sein können. Alternativ hierzu kann das Koppelelement grundsätzlich auch mittels eines Matrix-Schaltnetzes realisiert sein. Eine Datenübertragung innerhalb des industriellen Kommunikationsnetzes kann beispielsweise entsprechend High-availability Seamless Redundancy bzw. entsprechend Parallel Redundancy Protocol erfolgen.
Darüber hinaus ist Signalverarbeitungseinheit über das Koppelelement mit der Mehrzahl von ersten und zweiten Sende- und Empfangseinheiten verbunden.
Dabei ist die Signalverarbeitungseinheit mit dem Koppelelement zumindest über ein erstes und ein zweites Anschlußpaar verbunden. Dem Koppelelement ist eine Steuerungseinheit zugeordnet, die für einen Betrieb von virtuellen lokalen Netzen eingerichtet ist. Unter virtuelle lokale Netze sind beispielsweise als VLAN bezeichnete logische Gruppierungen von Kommunikationsteilnehmern bzw. Anschlüssen zu subsumieren. Für jeden einer ersten Sende- und Empfangseinheit zugeordneten Anschluß sowie einen ersten Anschluß des ersten Anschlußpaars jeweils ist ein virtuelles lokales Netz eingerichtet. In entsprechender Weise ist für jeden einer zweiten Sende- und Empfangseinheit zugeordneten Anschluß sowie einen zweiten Anschluß des ersten Anschlußpaars jeweils ein virtuelles lokales Netz eingerichtet. Eine Einrichtung von virtuellen lokalen Netzen kann grundsätzlich portbasiert oder dynamisch erfolgen. Des weiteren ist die Signalverarbeitungseinheit zur parallelen Weiterleitung zu sendender Nachrichten und zur Detektion empfangener redundanter Nachrichten für sämtliche ersten und zweiten Sende- und Empfangseinheiten anhand einer Kennung des jeweiligen virtuellen lokalen Netzes eingerichtet.

Erfindungsgemäß ist die Signalverarbeitungseinheit bei einer Weiterleitung einer Nachricht aus einem ersten redundanten Teilnetz an ein zweites redundantes Teilnetz für ein Einfügen einer dem zweiten redundanten Teilnetz zugeordneten Kennung in die Nachricht eingerichtet. Darüber hinaus ist die Signalverarbeitungseinheit bei einer Weiterleitung einer Nachricht aus einem ersten redundanten Teilnetz an ein zweites redundantes Teilnetz für ein Rückkoppeln der Nachricht über einen ersten Anschluß des zweiten Anschlußpaars, das Koppelelement und einen zweiten Anschluß des zweiten Anschlußpaars an eine dem zweiten redundanten Teilnetz zugeordnete Redundanzbehandlungseinheit eingerichtet. Hierzu umfaßt das Koppelelement ein Speicherelement, das für eine Zwischenspeicherung einer über das Koppelelement rückgekoppelten Nachricht eingerichtet ist. Vorzugsweise ist die Signalverarbeitungseinheit bei einer Weiterleitung einer Nachricht aus einem ersten redundanten Teilnetz an ein zweites redundantes Teilnetz für ein Entfernen einer dem zweiten redundanten Teilnetz zugeordneten Kennung aus einer rückgekoppelten Nachricht eingerichtet.

Das erfindungsgemäße Kommunikationsgerät ermöglicht eine Kopplung mehrerer HSR- oder PRP-Netzsegmente mit nur einer Signalverarbeitungseinheit. Dadurch daß Nachrichten aus einem ersten redundanten Teilnetz an ein zweites redundantes Teilnetz über das Koppelelement in die Signalverarbeitungseinheit rückgekoppelt werden, kann das Speicherelement der Koppeleinheit zur Zwischenspeicherung verwendet werden. Somit können Speicherengpässe bei einer Zwischenspeicherung in der Signalverarbeitungseinheit vermieden und eine Vielzahl von Signalverarbeitungsinstanzen für die einzelnen redundanten Teilnetze durch die Signalverarbeitungseinheit bereitgestellt werden.
Die Signalverarbeitungseinheit ist vorzugsweise mittels eines Field Programmable Gate Arrays (FPGA) realisiert, und das Koppelelement ist beispielsweise ein Backplane Switch mit zugeordnetem Controller. Somit kann ein FPGA quasi als Coprozessor für einen Backplane Switch Controller Netzkopplungsaufgaben übernehmen. Außerdem kann der Backplane Switch über zumindest einen Interlink-Anschluß mit dem einfach angebundenen Netzknoten oder redundanzfreien Teilnetz mit der Signalverarbeitungseinheit verbunden sein. Da Backplane Switch Controller üblicherweise eine VLAN-Funktionalität aufweisen, kann eine Anbindung eines FPGA als Coprozessor für einen Backplane Switch vereinfacht werden. Das FPGA kann nämlich anhand jeweiliger VLAN-Kennungen in Datenrahmen Nachrichten nach jeweiligen HSR- oder PRP-Netzsegmenten differenziert behandeln. Auf diese Weise ist eine erhebliche Aufwandsreduktion für eine Kopplung mehrerer redundanter Netzsegmente möglich. Dies wirkt sich einerseits Herstellungskosten und Energieverbrauch des erfindungsgemäßen Kommunikationsgeräts, andererseits aber auch auf einen geringeren Platzbedarf durch kompaktere Abmessungen aus. Zusätzlich kann ein FPGA zur Speicherung einer Tabelle (proxy node table) mit Angaben zu sämtlichen mit dem Koppelelement verbundenen einfach angebundenen Netzknoten genutzt werden. Dies ermöglicht eine einfache Verwaltung von mit dem Kommunikationsgerät verbundenen einfach angebundenen Netzknoten. Daher kann das erfindungsgemäße Kommunikationsgerät als Grundlage genutzt werden, um auf einfache Weise Geräte wie HSR/PRP-Proxy oder HSR/PRP-RedBox zu realisieren. Grundsätzlich kann das Kommunikationsgerät je nach Anwendungsgebiet als RedBox, QuadBox oder HSR-PRP-Koppler ausgeführt sein. Unterschiedliche Anwendungsgebiete stellen somit keine Einschränkung für eine Verwendbarkeit des erfindungsgemäßen Kommunikationsgeräts dar.
Entsprechend einer bevorzugten Weiterbildung des Kommunikationsgeräts ist das Koppelelement mit einer Mehrzahl einfach angebundener Netzknoten oder redundanzfreier Teilnetze verbunden. Dabei ist für den einfach angebundenen Netzknoten oder den redundanzfreien Teilnetzen zugeordnete Anschlüsse sowie für das zweite Anschlußpaar ein zusätzliches virtuelles lokales Netz eingerichtet. Damit können mehrere redundante HSR- oder PRP-Netzsegmente auf einfache Weise mit mehreren redundanzfreien Netzsegmenten verbunden werden.
Zueinander redundante Nachrichten sind entsprechend einer weiteren Ausgestaltung des Kommunikationsgeräts durch eine einheitliche Sequenznummer gekennzeichnet. Dabei ist der Signalverarbeitungseinheit eine Speichereinheit zugeordnet, die für eine Speicherung von Sequenznummern bereits fehlerfrei empfangener Nachrichten eingerichtet ist. Zudem ist die Redundanzbehandlungseinheit bei dieser weiteren Ausgestaltung für eine Überprüfung auf eine bereits gespeicherte Sequenznummer bei Empfang einer neuen Nachricht eingerichtet. Auf diese Weise ist eine Entlastung des Koppelelements von einer Ermittlung und Behandlung redundant gesendeter Nachrichten möglich, so daß eine entsprechende Funktionalität in einen auf der Signalverarbeitungseinheit basierenden Coprozessor für das Koppelelement integriert werden kann.
Entsprechend einer bevorzugten Ausgestaltung des Kommunikationsgeräts ist das Kommunikationsgerät derart eingerichtet, daß von den ersten Sende- und Empfangseinheiten empfangene Nachrichten über den ersten Anschluß des ersten Anschlußpaars an die Signalverarbeitungseinheit übermittelt werden. Von den zweiten Sende- und Empfangseinheiten empfangene Nachrichten werden dagegen über den zweiten Anschluß des ersten Anschlußpaars an die Signalverarbeitungseinheit übermittelt. An erste Sende- und Empfangseinheiten gerichtete Nachrichten werden über den ersten Anschluß des ersten Anschlußpaars an die Signalverarbeitungseinheit übermittelt. An zweite Sende- und Empfangseinheiten gerichtete Nachrichten werden in entsprechender Weise über den zweiten Anschluß des ersten Anschlußpaars an die Signalverarbeitungseinheit übermittelt. Dies ermöglicht einen erhöhten Nachrichtendurchsatz und eine zuverlässige Zuordnung von Nachrichten zu Signalverarbeitungsinstanzen der Signalverarbeitungseinheit.

Vorzugsweise ist das Kommunikationsgerät derart ausgestaltet und eingerichtet, daß von einfach angebundenen Netzknoten oder redundanzfreien Teilnetzen empfangene Nachrichten über den ersten oder zweiten Anschluß des zweiten Anschlußpaars an die Signalverarbeitungseinheit übermittelt werden. Dabei werden an einfach angebundene Netzknoten oder redundanzfreie Teilnetze gerichtete Nachrichten über den ersten oder zweiten Anschluß des zweiten Anschlußpaars an die Signalverarbeitungseinheit übermittelt. Dies ermöglicht einen hohen Nachrichtendurchsatz und eine zuverlässige Zuordnung von Nachrichten zu jeweiligen einfach angebundenen Netzknoten oder redundanzfreien Teilnetzen.

Entsprechend einer weiteren vorteilhaften Ausgestaltung des Kommunikationsgeräts ist für jedes redundante Teilnetz eine zugeordnete Instanz in der Signalverarbeitungseinheit vorgesehen. Außerdem ist die Signalverarbeitungseinheit für ein Auslesen von Absenderadresse und Kennung eines virtuellen lokalen Netzes aus einer von einer ersten oder zweiten Sende- und Empfangseinheit empfangenen Nachricht eingerichtet. Des weiteren ist die Signalverarbeitungseinheit für ein Speichern einer aus einer Nachricht ausgelesenen Adresse und einer zugehörigen Kennung eines virtuellen lokalen Netzes in einer Adreß-Instanz-Tabelle eingerichtet. Darüber hinaus ist die Signalverarbeitungseinheit für eine Weiterleitung einer Nachricht an eine zu einer Zieladresse zugeordnete Instanz entsprechend einem Abfrageergebnis aus der Adreß-Instanz-Tabelle eingerichtet. Dies ermöglicht eine besonders zuverlässige und leistungsfähige Nachrichtenverarbeitung. Zusätzlich oder alternativ zu einem Auslesen aus einer Nachricht kann die Signalverarbeitungseinheit für ein Abrufen einer Zuordnung zwischen Netzadresse und Kennung eines virtuellen lokalen Netzes aus einer in einem Speicherelement des Koppelelements gespeicherten Adreßtabelle eingerichtet sein. In diesem Fall ist die Signalverarbeitungseinheit für ein Speichern einer abgerufenen Zuordnung zwischen Netzadresse und Kennung eines virtuellen lokalen Netzes in der Adreß-Instanz-Tabelle eingerichtet. Dies ermöglicht eine zuverlässige und schnelle Zuordnung von Nachrichten zu Signalverarbeitungsinstanzen der Signalverarbeitungseinheit. Vorzugsweise ist die Signalverarbeitungseinheit für ein Löschen eines Eintrags aus der Adreß-Instanz-Tabelle nach Ablauf einer vorgebbaren Gültigkeitsdauer eingerichtet. Damit können topologische Änderungen zuverlässig in der Adreß-Instanz-Tabelle berücksichtigt werden.

Entsprechend dem Verfahren zum Betrieb eines Kommunikationsgeräts in einem redundanten industriellen Kommunikationsnetz umfaßt eine Mehrzahl erster und zweiter Sende- und Empfangseinheiten, die jeweils eine Schnittstelle für eine Netzverbindung eines redundanten Teilnetzes aufweisen. Dabei weisen jeweils eine erste Sende- und Empfangseinheit und eine dieser zugeordnete zweite Sende- und Empfangseinheit eine identische Netzadresse und einen identischen Geräteidentifikator auf. Mit der ersten und zweiten Sende- und Empfangseinheit ist eine Signalverarbeitungseinheit verbunden, die zu sendende Nachrichten parallel an beide Sendeeinheiten weiterleitet und von den Empfangseinheiten empfangene redundante Nachrichten detektiert. Mit der Signalverarbeitungseinheit ist ein Koppelelement verbunden, über das ein einfach angebundener Netzknoten oder ein redundanzfreies Teilnetz mit der Signalverarbeitungseinheit verbunden ist. Innerhalb des industriellen Kommunikationsnetzes können Nachrichten beispielsweise entsprechend High-availability Seamless Redundancy bzw. entsprechend Parallel Redundancy Protocol übertragen werden.
Die Signalverarbeitungseinheit ist entsprechend dem erfindungsgemäßen Verfahren über das Koppelelement mit der Mehrzahl von ersten und zweiten Sende- und Empfangseinheiten verbunden. Dabei ist die Signalverarbeitungseinheit mit dem Koppelelement zumindest über ein erstes und ein zweites Anschlußpaar verbunden. Dem Koppelelement ist ferner eine Steuerungseinheit zugeordnet, die für einen Betrieb von virtuellen lokalen Netzen eingerichtet wird. Für jeden einer ersten Sende- und Empfangseinheit zugeordneten Anschluß sowie einen ersten Anschluß des ersten Anschlußpaars wird jeweils ein virtuelles lokales Netz eingerichtet. In entsprechender Weise wird für jeden einer zweiten Sende- und Empfangseinheit zugeordneten Anschluß sowie einen zweiten Anschluß des ersten Anschlußpaars jeweils ein virtuelles lokales Netz eingerichtet. Die Signalverarbeitungseinheit leitet für sämtliche ersten und zweiten Sende- und Empfangseinheiten anhand einer Kennung des jeweiligen virtuellen lokalen Netzes zu sendende Nachrichten parallel an die jeweilige erste oder zweite Sende- und Empfangseinheit weiter und detektiert empfangene redundante Nachrichten. Die Kennung eines virtuellen lokalen Netzes kann beispielsweise mittels Frame-Tagging entsprechend IEEE 802.1Q, Inter-Switch Link (ISL) oder FDDI 802.10 (Fiber Distributed Data Interface) realisiert sein.

Bei einer Weiterleitung einer Nachricht aus einem ersten redundanten Teilnetz an ein zweites redundantes Teilnetz fügt die Signalverarbeitungseinheit erfindungsgemäß eine dem zweiten redundanten Teilnetz zugeordnete Kennung in die Nachricht ein. Darüber hinaus koppelt die Signalverarbeitungseinheit bei einer Weiterleitung einer Nachricht aus einem ersten redundanten Teilnetz an ein zweites redundantes Teilnetz die Nachricht über einen ersten Anschluß des zweiten Anschlußpaars, das Koppelelement sowie einen zweiten Anschluß des zweiten Anschlußpaars an eine dem zweiten redundanten Teilnetz zugeordnete Redundanzbehandlungseinheit rück. Dabei umfaßt das Koppelelement ein Speicherelement, in dem eine über das Koppelelement rückgekoppelte Nachricht zwischengespeichert wird. Bei einer Weiterleitung einer Nachricht aus einem ersten redundanten Teilnetz an ein zweites redundantes Teilnetz entfernt die Signalverarbeitungseinheit vorzugsweise eine dem zweiten redundanten Teilnetz zugeordnete Kennung aus einer rückgekoppelten Nachricht.

Insgesamt ermöglicht das erfindungsgemäße Verfahren eine Vermeidung von Speicherengpässen durch eine Zwischenspeicherung in der Signalverarbeitungseinheit aufgrund der Verwendung des Speicherelements der Koppeleinheit zur Zwischenspeicherung. Daher kann eine Vielzahl von Signalverarbeitungsinstanzen für die einzelnen redundanten Teilnetze durch die Signalverarbeitungseinheit bereitgestellt werden.
Entsprechend einer vorteilhaften Ausgestaltung des Verfahrens ist das Koppelelement mit einer Mehrzahl einfach angebundener Netzknoten oder redundanzfreier Teilnetze verbunden. Dabei wird für den einfach angebundenen Netzknoten oder den redundanzfreien Teilnetzen zugeordnete Anschlüsse sowie für das zweite Anschlußpaar ein zusätzliches virtuelles lokales Netz eingerichtet. Auf diese Weise können mehrere redundante HSR- oder PRP-Netzsegmente effizient mit mehreren redundanzfreien Netzsegmenten gekoppelt werden. Zueinander redundante Nachrichten werden entsprechend einer bevorzugten Ausgestaltung des erfindungsgemäßen Verfahrens durch eine einheitliche Sequenznummer gekennzeichnet. Darüber hinaus werden vorzugsweise in einer der Signalverarbeitungseinheit zugeordneten Speichereinheit Sequenznummern von bereits fehlerfrei empfangenen Nachrichten gespeichert. Bei Empfang einer neuen Nachricht kann die Signalverarbeitungseinheit deren Sequenznummer damit auf Übereinstimmung mit einer bereits gespeicherten Sequenznummer auf einfache Weise überprüfen.
Entsprechend einer weiteren vorteilhaften Ausgestaltung des erfindungsgemäßen Verfahrens werden von den ersten Sende- und Empfangseinheiten empfangene Nachrichten über den ersten Anschluß des ersten Anschlußpaars an die Signalverarbeitungseinheit übermittelt. Analog dazu werden von den zweiten Sende- und Empfangseinheiten empfangene Nachrichten über den zweiten Anschluß des ersten Anschlußpaars an die Signalverarbeitungseinheit übermittelt. An erste Sende- und Empfangseinheiten gerichtete Nachrichten werden über den ersten Anschluß des ersten Anschlußpaars an die Signalverarbeitungseinheit übermittelt. Dagegen werden an zweite Sende- und Empfangseinheiten gerichtete Nachrichten vorteilhafterweise über den zweiten Anschluß des ersten Anschlußpaars an die Signalverarbeitungseinheit übermittelt. Damit können Nachrichten zu Signalverarbeitungsinstanzen der Signalverarbeitungseinheit auch bei einem erhöhten Nachrichtendurchsatz zuverlässig zugeordnet werden.

Vorzugsweise werden von einfach angebundenen Netzknoten oder redundanzfreien Teilnetzen empfangene Nachrichten über den ersten oder zweiten Anschluß des zweiten Anschlußpaars an die Signalverarbeitungseinheit übermittelt. Umgekehrt werden an einfach angebundene Netzknoten oder redundanzfreie Teilnetze gerichtete Nachrichten vorteilhafterweise über den ersten oder zweiten Anschluß des zweiten Anschlußpaars an die Signalverarbeitungseinheit übermittelt. Damit können Nachrichten zu jeweiligen einfach angebundenen Netzknoten oder redundanzfreien Teilnetzen zuverlässig zugeordnet werden.

Entsprechend einer besonders bevorzugten Ausgestaltung des erfindungsgemäßen Verfahrens ist für jedes redundante Teilnetz eine zugeordnete Instanz in der Signalverarbeitungseinheit vorgesehen. Außerdem liest die Signalverarbeitungseinheit eine Absenderadresse und Kennung eines virtuellen lokalen Netzes aus einer von einer ersten oder zweiten Sende- und Empfangseinheit empfangenen Nachricht aus. Des weiteren speichert die Signalverarbeitungseinheit eine aus einer Nachricht ausgelesene Adresse und eine zugehörige Kennung eines virtuellen lokalen Netzes in einer Adreß-Instanz-Tabelle. Entsprechend einem Abfrageergebnis aus der Adreß-Instanz-Tabelle leitet die Signalverarbeitungseinheit eine Nachricht an eine zu einer Zieladresse zugeordnete Instanz weiter. Auf diese Weise können Nachrichten zuverlässig durch zugeordnete Signalverarbeitungsinstanzen der Signalverarbeitungseinheit verarbeitet werden.

Zusätzlich oder alternativ zu einem Auslesen einer Absenderadresse und einer Kennung eines virtuellen lokalen Netzes aus einer Nachricht kann die Signalverarbeitungseinheit eine Zuordnung zwischen Netzadresse und Kennung eines virtuellen lokalen Netzes aus einer in einem Speicherelement des Koppelelements gespeicherten Adreßtabelle abrufen. In diesem Fall speichert die Signalverarbeitungseinheit eine abgerufene Zuordnung zwischen Netzadresse und Kennung eines virtuellen lokalen Netzes in der Adreß-Instanz-Tabelle. Damit können Nachrichten zu Signalverarbeitungsinstanzen der Signalverarbeitungseinheit zuverlässig und schnell zugeordnet werden. Vorzugsweise löscht die Signalverarbeitungseinheit einen Eintrag aus der Adreß-Instanz-Tabelle nach Ablauf einer vorgebbaren Gültigkeitsdauer. Dies ermöglicht eine zuverlässige Berücksichtigung von topologischen Änderungen in der Adreß-Instanz-Tabelle.
Die vorliegende Erfindung wird nachfolgend an einem Ausführungsbeispiel anhand der Zeichnung näher erläutert. Es zeigt
- Figur 1: eine schematische Darstellung von zwei Kommunikationsgeräten für ein redundant betreibbares industrielles Kommunikationsnetz,
- Figur 2: eine schematische Darstellung einer Signalverarbeitungsinstanz der Kommunikationsgeräte gemäß Figur 1.

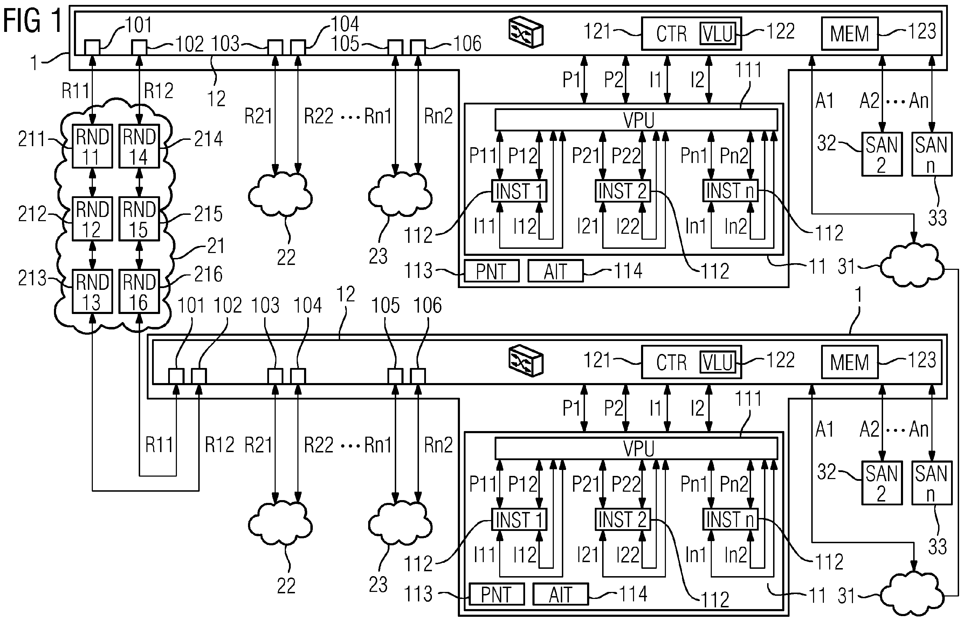

In Figur 1 sind zwei Kommunikationsgeräte 1 für ein redundant betreibbares industrielles Kommunikationsnetz dargestellt, das mehrere HSR-Teilnetze 21-23 umfaßt, in denen Nachrichten entsprechend High Availability Seamless Redundancy (HSR) übertragen werden. Dabei umfaßt eine Nachricht zumindest einen Datenrahmen. Die HSR-Teilnetze 21-23 weisen jeweils eine Ringtopologie auf. Für ein erstes HSR-Teilnetz 21 ist beispielhaft detaillierter dargestellt, daß mehrere Netzknoten 211-216 in einer Ringstruktur über Netzverbindungen miteinander verbunden sind. Zu den Netzknoten 211-216 kann beispielsweise ein Netzknoten zählen, der einem SCADA-System (supervisory control and data acquisition) eines industriellen Fertigungs- oder Prozeßautomatisierungssystems zugeordnet ist. In die Ringstruktur der HSR-Teilnetze 21-23 sind auch die beiden Kommunikationsgerät 1 eingebunden, die im vorliegenden Ausführungsbeispiel jeweils eine mit mehreren redundant betriebenen HSR-Teilnetzen 21-23 verbundene RedBox darstellen. Zusätzlich sind beide Kommunikationsgeräte 1 jeweils über einen einfach angebundenen Netzknoten mit einem PRP-Teilnetz verbunden, innerhalb dessen Nachrichten entsprechend Parallel Redundancy Protocol übertragen werden. Das PRP-Teilnetz umfaßt zwei zueinander redundante Netzsegmente 31, an die jeweils mehrere Netzknoten doppelt angebunden sind.

Die Kommunikationsgeräte 1 umfassen jeweils mehrere erste 101, 103, 105 und zweite Sende- und Empfangseinheiten 102, 104, 106, die jeweils eine Schnittstelle für eine Netzverbindung eines redundant betriebenen HSR-Teilnetzes 21-23 aufweisen. Einander zugeordnete erste und zweite Sende- und Empfangseinheiten 101-102, 103-104, 105-106 weisen eine identische Netzadresse und eine identische MAC-Adresse auf.
Über ein durch einen Backplane Switch realisiertes Koppelelement 12 sind die ersten und zweiten Sende- und Empfangseinheiten 101-106 mit einer durch ein Field Programmable Gate Array (FPGA) realisierten Signalverarbeitungseinheit 11 verbunden, die mehrere über eine Vorverarbeitungseinheit 111 gekoppelte und gesteuerte Signalverarbeitungsinstanzen 112 umfaßt. Dabei sind Signalverarbeitungseinheit 11 und das Koppelelement 12 im vorliegenden Ausführungsbeispiel über ein erstes Anschlußpaar P1-P2 und ein zweites Anschlußpaar I1-I2 miteinander verbunden.

Im vorliegenden Ausführungsbeispiel ist für jedes HSR-Teilnetz 21-23 eine zugeordnete Signalverarbeitungsinstanz 112 vorgesehen. Dabei ist die Vorverarbeitungseinheit 111 zur Kommunikation zwischen dem Koppelelement 12 und den einzelnen Signalverarbeitungsinstanzen 112 vorgesehen. Alternativ zu einer Signalverarbeitungseinheit 11 mit mehreren Signalverarbeitungsinstanzen 112 kann grundsätzlich auch eine monolithische Signalverarbeitungseinheit 11 mit Multi-Instanz-Fähigkeit zu verwenden. Während Nachrichten bei einer Signalverarbeitungseinheit 11 mit mehreren Signalverarbeitungsinstanzen 112 grundsätzlich parallel verarbeitet werden können, erfolgt bei einer monolithischen Signalverarbeitungseinheit 11 eine sequentielle Verarbeitung in mehreren Instanzen.

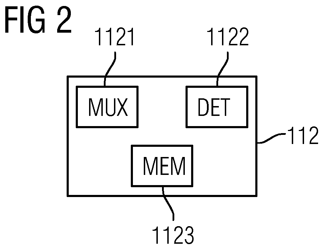

Entsprechend Figur 2 implementieren die Signalverarbeitungsinstanzen 112 jeweils eine Multiplexereinheit 1121 zur parallelen Weiterleitung zu sendender Nachrichten an die Sende- und Empfangseinheiten 101-106 und eine Redundanzbehandlungseinheit 1122 zur Verarbeitung von den durch die Sende- und Empfangseinheiten 101-106 empfangenen Nachrichten. Die Redundanzbehandlungseinheit 1122 umfaßt eine Filtereinheit, die für eine Detektion empfangener redundanter Nachrichten eingerichtet ist.

Das einen zugeordneten Controller 121 aufweisende Koppelelement 12 ist über jeweils einen Interlink-Anschluß A1, A2, An mit einem Netzsegment 31 des PRP-Teilnetzes bzw. mit einem einfach angebundenen Netzknoten 32, 33 verbunden. Grundsätzlich könnte das Koppelelement 12 auch mit einem oder mehreren redundanzfreien Teilnetzen verbunden sein. Nachfolgende Ausführungen gelten für einen derartigen Anwendungsfall gleichermaßen.

Die Signalverarbeitungseinheit 11 weist zusätzlich eine Speichereinheit 113 auf, in der eine Tabelle (proxy node table) mit Angaben zu sämtlichen mit dem Koppelelement 12 verbundenen einfach angebundenen Netzknoten gespeichert ist. Dies ermöglicht eine einfache Verwaltung von mit dem Kommunikationsgerät 1 verbundenen einfach angebundenen Netzknoten.

Der Controller 121 des Koppelelements 12 umfaßt eine Steuerungseinheit 122 zur Konfiguration und Verwaltung von virtuellen lokalen Netzen zur Zusammenfassung von Teilnehmer- bzw. Anschlußgruppen über Grenzen von Broadcast-Domänen hinweg. Damit ist der Controller 121 für einen Betrieb von virtuellen lokalen Netzen eingerichtet. Für jeden einer ersten Sende- und Empfangseinheit 101, 103, 105 zugeordneten Anschluß R11, R21, Rn1 sowie einen ersten Anschluß P1 des ersten Anschlußpaars P1-P2 wird jeweils ein virtuelles lokales Netz eingerichtet. In entsprechender Weise wird für jeden einer zweiten Sende- und Empfangseinheit 102, 104, 106 zugeordneten Anschluß R12, R22, Rn2 sowie einen zweiten Anschluß P2 des ersten Anschlußpaars P1-P2 jeweils ein virtuelles lokales Netz eingerichtet.

Einem virtuellen lokalen Netz zugeordnete Nachrichten werden beispielsweise durch eine in einen jeweiligen Datenrahmen eingefügte Kennung des virtuellen lokalen Netzes gekennzeichnet. Diese Kennung wird durch die Vorverarbeitungseinheit 111 ausgewertet, welche die jeweilige Nachricht an die zugeordnete Signalverarbeitungsinstanz 112 weiterleitet. Damit kann die Signalverarbeitungseinheit 11 für sämtliche ersten und zweiten Sende- und Empfangseinheiten 101-106 anhand der Kennung des jeweiligen virtuellen lokalen Netzes zu sendende Nachrichten parallel an die jeweilige erste und zweite Sende- und Empfangseinheit weiterleiten und empfangene redundante Nachrichten detektieren. Somit ist lediglich eine Signalverarbeitungseinheit 11 anstelle einer Vielzahl von Signalverarbeitungseinheiten erforderlich, die zur parallelen Weiterleitung zu sendender Nachrichten und zur Detektion empfangener redundanter Nachrichten für sämtliche ersten und zweiten Sende- und Empfangseinheiten 101-106 anhand einer Kennung des jeweiligen virtuellen lokalen Netzes eingerichtet ist. In entsprechender Weise wird auch für den Netzsegmenten 31, den einfach angebundenen Netzknoten 32-33 oder redundanzfreien Teilnetzen zugeordnete Anschlüsse sowie für das zweite Anschlußpaar I1-I2 ein zusätzliches virtuelles lokales Netz eingerichtet.

Zur Verwaltung der Signalverarbeitungsinstanzen 112 durch die Signalverarbeitungseinheit 11 liest die Vorverarbeitungseinheit 111 eine Absenderadresse und Kennung eines virtuellen lokalen Netzes aus einer von einer ersten oder zweiten Sende- und Empfangseinheit 101-106 empfangenen Nachricht aus. Anschließend speichert die Vorverarbeitungseinheit 111 eine aus einer Nachricht ausgelesene Adresse und eine zugehörige Kennung eines virtuellen lokalen Netzes in einer Adreß-Instanz-Tabelle, die in eine hierfür reservierte Speichereinheit 114 der Signalverarbeitungseinheit 11 geschrieben bzw. aus dieser gelesen wird. Entsprechend einem Abfrageergebnis aus der Adreß-Instanz-Tabelle leitet die Vorverarbeitungseinheit 111 eine Nachricht an eine zu einer Zieladresse zugeordnete Signalverarbeitungsinstanz 112 weiter.

Zusätzlich oder alternativ zu einem Auslesen einer Absenderadresse und einer Kennung eines virtuellen lokalen Netzes aus einer Nachricht kann die Signalverarbeitungseinheit 11 eine Zuordnung zwischen Netzadresse und Kennung eines virtuellen lokalen Netzes aus einer in einem Speicherelement 123 des Koppelelements gespeicherten Adreßtabelle abrufen. In diesem Fall speichert die Signalverarbeitungseinheit 11 eine abgerufene Zuordnung zwischen Netzadresse und Kennung eines virtuellen lokalen Netzes in der Adreß-Instanz-Tabelle. Nach Ablauf einer vorgebbaren Gültigkeitsdauer löscht die Signalverarbeitungseinheit 11 einen Eintrag aus der Adreß-Instanz-Tabelle, so daß Topologieänderungen berücksichtigt werden können.

Bei einer Weiterleitung einer Nachricht aus einem ersten redundanten Teilnetz 21-23 an ein zweites redundantes Teilnetz 21-23 fügt die Vorverarbeitungseinheit 111 eine dem zweiten redundanten Teilnetz zugeordnete Kennung in die Nachricht ein und koppelt die Nachricht über einen ersten Anschluß I1 des zweiten Anschlußpaars I1-I2, das Koppelelement 12 sowie einen zweiten Anschluß I2 des zweiten Anschlußpaars I1-I2 an eine dem zweiten redundanten Teilnetz zugeordnete Signalverarbeitungsinstanz 112 rück. Dabei umfaßt das Koppelelement 12 ein Speicherelement 123, in dem eine über das Koppelelement 12 rückgekoppelte Nachricht zwischengespeichert wird. Darüber hinaus entfernt die Vorverarbeitungseinheit 111 bei einer Weiterleitung einer Nachricht aus einem ersten redundanten Teilnetz 21-23 an ein zweites redundantes Teilnetz 21-23 eine dem zweiten redundanten Teilnetz zugeordnete Kennung aus einer rückgekoppelten Nachricht, und zwar nach ihrer Rückkopplung in die Signalverarbeitungseinheit 11.

Von den ersten Sende- und Empfangseinheiten 101, 103, 105 empfangene Nachrichten werden über den ersten Anschluß P1 des ersten Anschlußpaars P1-P2 an die Signalverarbeitungseinheit 11 übermittelt. In entsprechender Weise werden von den zweiten Sende- und Empfangseinheiten 102, 104, 106 empfangene Nachrichten über den zweiten Anschluß P2 des ersten Anschlußpaars P1-P2 an die Signalverarbeitungseinheit 11 übermittelt. Des weiteren werden an erste Sende- und Empfangseinheiten 101, 103, 105 gerichtete Nachrichten über den ersten Anschluß P1 des ersten Anschlußpaars P1-P2 an die Signalverarbeitungseinheit 11 übermittelt. Analog dazu werden an zweite Sende- und Empfangseinheiten 102, 104, 106 gerichtete Nachrichten über den zweiten Anschluß P2 des ersten Anschlußpaars P1-P2 an die Signalverarbeitungseinheit 11 übermittelt.

Von einfach angebundenen Netzknoten oder redundanzfreien Teilnetzen empfangene Nachrichten werden über den ersten oder zweiten Anschluß I1, I2 des zweiten Anschlußpaars I1-I2 an die Signalverarbeitungseinheit 11 übermittelt. Dementsprechend werden an einfach angebundene Netzknoten oder redundanzfreie Teilnetze gerichtete Nachrichten über den ersten oder zweiten Anschluß I1, I2 des zweiten Anschlußpaars I1-I2 an die Signalverarbeitungseinheit 11 übermittelt.

Für interne Anschlüsse zwischen den Signalverarbeitungsinstanzen 112 und der Vorverarbeitungseinheit sowie die beiden Anschlußpaare P1-P2, I1-I2 gelten folgende Beziehungen:
- alle Anschlüsse Px1 sind dem ersten Anschluß P1 des ersten Anschlußpaars P1-P2 zugeordnet;
- alle Anschlüsse Px2 sind dem zweiten Anschluß P2 des ersten Anschlußpaars P1-P2 zugeordnet;
- alle Anschlüsse Ix1 sind dem ersten Anschluß I1 des zweiten Anschlußpaars I1-I2 zugeordnet;
- alle Anschlüsse Ix2 sind dem zweiten Anschluß I2 des zweiten Anschlußpaars I1-I2 zugeordnet.
Insgesamt ergibt sich mit vorangehend beschriebenen Beziehungen zwischen den Anschlüssen eine eindeutige Zuordnung zwischen Anschlüssen des Koppelelements 12 und Anschlüssen der Signalverarbeitungsinstanzen 122. Damit wird eine zuverlässige Zuordnung von Nachrichten zu Ziel- bzw. Quell-Signalverarbeitungsinstanzen in der Signalverarbeitungseinheit 11 erzielt.

Zueinander redundante Nachrichten werden sowohl bei einer Datenübertragung entsprechend High-availability Seamless Redundancy als auch bei einer Datenübertragung entsprechend Parallel Redundancy Protocol durch eine einheitliche Sequenznummer gekennzeichnet. Daher sind den Signalverarbeitungsinstanzen 112 jeweils eine Speichereinheit 1123 zugeordnet, die für eine Speicherung von Sequenznummern bereits fehlerfrei empfangener Nachrichten bzw. für eine für eine Speicherung von bereits fehlerfrei empfangenen Nachrichten eingerichtet ist. Auf dieser Grundlage überprüft die Signalverarbeitungseinheit 11 bei Empfang einer neuen Nachricht dessen Sequenznummer auf Übereinstimmung mit einer bereits gespeicherten Sequenznummer und veranlaßt eine Redundanzbehandlung, und zwar für alle mit dem Kommunikationsgerät 1 verbundenen redundant betriebenen Teilnetze 21-23.

Die Merkmale der vorangehend beschriebenen Ausführungsbeispiele können sowohl einzeln als auch in beschriebener Kombination miteinander realisiert sein.

## Patentansprüche

1. Kommunikationsgerät für ein redundant betreibbares industrielles Kommunikationsnetz mit
- zumindest einer ersten (101, 103, 105) und einer zweiten Sende- und Empfangseinheit (102, 104, 106), die jeweils eine Schnittstelle für eine Netzverbindung eines redundanten Teilnetzes aufweisen, wobei beide Sende- und Empfangseinheiten eine identische Netzadresse und einen identischen Geräteidentifikator aufweisen,
- einer mit der ersten und zweiten Sende- und Empfangseinheit verbundenen Signalverarbeitungseinheit (11), die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist, wobei die Redundanzbehandlungseinheit eine Filtereinheit umfaßt, die für eine Detektion empfangener redundanter Nachrichten eingerichtet ist,
- einem mit der Signalverarbeitungseinheit (11) verbundenen Koppelelement (12), über das ein einfach angebundener Netzknoten (32, 33) oder ein redundanzfreies Teilnetz mit der Signalverarbeitungseinheit verbunden ist,
**dadurch gekennzeichnet, daß**
- das Koppelelement (12) ein Backplane Switch mit zugeordnetem Controller (121) ist und über zumindest einen Interlink-Anschluß (A2-An) mit dem einfach angebundenen Netzknoten (32, 33) oder redundanzfreien Teilnetz verbunden ist,
- die Signalverarbeitungseinheit (11) eine Speichereinheit (113) aufweist, in der eine Tabelle mit Angaben zu sämtlichen mit dem Koppelelement (12) verbundenen einfach angebundenen Netzknoten (32, 33) gespeichert ist,
- eine Datenübertragung entsprechend High-availability Seamless Redundancy und/oder entsprechend Parallel Redundancy Protocol erfolgt,
- mit nur einer Signalverarbeitungseinheit (11) eine Kopplung mehrerer HSR- oder PRP-Netzsegmente (21-23; 31) erfolgt,
- die Signalverarbeitungseinheit (11) über das Koppelelement (12) mit einer Mehrzahl von ersten und zweiten Sende- und Empfangseinheiten (101-106) verbunden ist, wobei jeweils eine erste Sende- und Empfangseinheit und eine dieser zugeordnete zweite Sende- und Empfangseinheit eine identische Netzadresse und einen identischen Geräteidentifikator aufweisen,
- die Signalverarbeitungseinheit (11) mit dem Koppelelement (12) zumindest über ein erstes (P1-P2) und ein zweites Anschlußpaar (I1-I2) verbunden ist,
- der Controller (121) des Koppelelements (12) für einen Betrieb von virtuellen lokalen Netzen eingerichtet ist, wobei für jeden einer ersten Sende- und Empfangseinheit (101, 103, 105) zugeordneten Anschluß (R11, R21, Rn1) sowie einen ersten Anschluß (P1) des ersten Anschlußpaars (P1-P2) jeweils ein virtuelles lokales Netz eingerichtet ist, und wobei für jeden einer zweiten Sende- und Empfangseinheit (102, 104, 106) zugeordneten Anschluß (R12, R22, Rn2) sowie einen zweiten Anschluß (P2) des ersten Anschlußpaars (P1-P2) jeweils ein virtuelles lokales Netz eingerichtet ist,
- die Signalverarbeitungseinheit (11) zur parallelen Weiterleitung zu sendender Nachrichten und zur Detektion empfangener redundanter Nachrichten für sämtliche ersten und zweiten Sende- und Empfangseinheiten (101-106) anhand einer Kennung des jeweiligen virtuellen lokalen Netzes eingerichtet ist,
- die Signalverarbeitungseinheit (11) bei einer Weiterleitung einer Nachricht aus einem ersten redundanten Teilnetz an ein zweites redundantes Teilnetz für ein Einfügen einer dem zweiten redundanten Teilnetz zugeordneten Kennung in die Nachricht sowie für ein Rückkoppeln der Nachricht über einen ersten Anschluß (I1) des zweiten Anschlußpaars (I1-I2), das Koppelelement (12) und einen zweiten Anschluß (I2) des zweiten Anschlußpaars (I1-I2) an eine dem zweiten redundanten Teilnetz zugeordnete Redundanzbehandlungseinheit eingerichtet ist,
- das Koppelelement (12) ein Speicherelement (123) umfaßt, das für eine Zwischenspeicherung einer über das Koppelelement rückgekoppelten Nachricht eingerichtet ist.

2. Kommunikationsgerät nach Anspruch 1,
bei dem die Signalverarbeitungseinheit (12) bei einer Weiterleitung einer Nachricht aus einem ersten redundanten Teilnetz an ein zweites redundantes Teilnetz für ein Entfernen einer dem zweiten redundanten Teilnetz zugeordneten Kennung aus einer rückgekoppelten Nachricht eingerichtet ist.

3. Kommunikationsgerät nach einem der Ansprüche 1 oder 2,
bei dem von den ersten Sende- und Empfangseinheiten (101, 103, 105) empfangene Nachrichten über den ersten Anschluß (P1) des ersten Anschlußpaars (P1-P2) an die Signalverarbeitungseinheit (11) übermittelt werden, bei dem von den zweiten Sende- und Empfangseinheiten (102, 104, 106) empfangene Nachrichten über den zweiten Anschluß (P2) des ersten Anschlußpaars (P1-P2) an die Signalverarbeitungseinheit (11) übermittelt werden, bei dem an erste Sende- und Empfangseinheiten gerichtete Nachrichten über den ersten Anschluß des ersten Anschlußpaars an die Signalverarbeitungseinheit übermittelt werden, und bei dem an zweite Sende- und Empfangseinheiten gerichtete Nachrichten über den zweiten Anschluß des ersten Anschlußpaars an die Signalverarbeitungseinheit übermittelt werden.

4. Kommunikationsgerät nach einem der Ansprüche 1 bis 3,
bei dem von einfach angebundenen Netzknoten (32, 33) oder redundanzfreien Teilnetzen empfangene Nachrichten über den ersten (I1) oder zweiten Anschluß (I2) des zweiten Anschlußpaars (I1-I2) an die Signalverarbeitungseinheit (11) übermittelt werden, und bei dem an einfach angebundene Netzknoten oder redundanzfreie Teilnetze gerichtete Nachrichten über den ersten oder zweiten Anschluß des zweiten Anschlußpaars an die Signalverarbeitungseinheit übermittelt werden.

5. Kommunikationsgerät nach einem der Ansprüche 1 bis 4,
bei dem für jedes redundante Teilnetz (21-23; 31) eine zugeordnete Instanz (112) in der Signalverarbeitungseinheit (11) vorgesehen ist, bei dem die Signalverarbeitungseinheit für ein Auslesen von Absenderadresse und Kennung eines virtuellen lokalen Netzes aus einer von einer ersten oder zweiten Sende- und Empfangseinheit empfangenen Nachricht eingerichtet ist, bei dem die Signalverarbeitungseinheit für ein Speichern einer aus einer Nachricht ausgelesenen Adresse und einer zugehörigen Kennung eines virtuellen lokalen Netzes in einer Adreß-Instanz-Tabelle eingerichtet ist, und bei dem die Signalverarbeitungseinheit für eine Weiterleitung einer Nachricht an eine zu einer Zieladresse zugeordnete Instanz entsprechend einem Abfrageergebnis aus der Adreß-Instanz-Tabelle eingerichtet ist.

6. Kommunikationsgerät nach Anspruch 5,
bei dem die Signalverarbeitungseinheit (11) zusätzlich oder alternativ zu einem Auslesen aus einer Nachricht für ein Abrufen einer Zuordnung zwischen Netzadresse und Kennung eines virtuellen lokalen Netzes aus einer in einem Speicherelement (123) des Koppelelements (12) gespeicherten Adreßtabelle eingerichtet ist, und bei dem die Signalverarbeitungseinheit für ein Speichern einer abgerufenen Zuordnung zwischen Netzadresse und Kennung eines virtuellen lokalen Netzes in der Adreß-Instanz-Tabelle eingerichtet ist.

7. Kommunikationsgerät nach einem der Ansprüche 5 oder 6,
bei dem die Signalverarbeitungseinheit (11) für ein Löschen eines Eintrags aus der Adreß-Instanz-Tabelle nach Ablauf einer vorgebbaren Gültigkeitsdauer eingerichtet ist.

8. Kommunikationsgerät nach einem der Ansprüche 1 bis 7,
das Koppelelement (12) mit einer Mehrzahl einfach angebundener Netzknoten (32, 33) oder redundanzfreier Teilnetze verbunden ist, wobei für den einfach angebundenen Netzknoten oder den redundanzfreien Teilnetzen zugeordnete Anschlüsse sowie für das zweite Anschlußpaar ein zusätzliches virtuelles lokales Netz eingerichtet ist.

9. Kommunikationsgerät nach einem der Ansprüche 1 bis 8,
bei dem zueinander redundante Nachrichten durch eine einheitliche Sequenznummer gekennzeichnet sind, und bei dem der Signalverarbeitungseinheit eine Speichereinheit zugeordnet ist, die für eine Speicherung von Sequenznummern bereits fehlerfrei empfangener Nachrichten eingerichtet ist, und bei dem die Redundanzbehandlungseinheit für eine Überprüfung auf eine bereits gespeicherte Sequenznummer bei Empfang einer neuen Nachricht eingerichtet ist.

10. Kommunikationsgerät nach einem der Ansprüche 1 bis 9,
bei dem das Koppelelement (12) ein Hochgeschwindigkeitsbus ist, und bei dem über den Hochgeschwindigkeitsbus weitere einfach angebundene Netzknoten (32, 33) oder redundanzfreie Teilnetze mit der Signalverarbeitungseinheit (12) verbunden sind.

11. Kommunikationsgerät nach einem der Ansprüche 1 bis 10, bei dem die Signalverarbeitungseinheit (11) mittels eines Field Programmable Gate Arrays realisiert ist.

12. Verfahren zum Betrieb eines Kommunikationsgeräts in einem redundanten industriellen Kommunikationsnetz, bei dem
- das Kommunikationsgeräts zumindest eine ersten (101, 103, 105) und eine zweite Sende- und Empfangseinheit (102, 104, 106) umfaßt, die jeweils eine Schnittstelle für eine Netzverbindung des industriellen Kommunikationsnetzes aufweisen, wobei beide Sende- und Empfangseinheiten eine identische Netzadresse und einen identischen Geräteidentifikator aufweisen,
- mit der ersten und zweiten Sende- und Empfangseinheit eine Signalverarbeitungseinheit (11) verbunden ist, die zu sendende Nachrichten parallel an beide Sendeeinheiten weiterleitet und von den Empfangseinheiten empfangene redundante Nachrichten detektiert,
- mit der Signalverarbeitungseinheit (11) ein Koppelelement (12) verbunden ist, über das ein einfach angebundener Netzknoten (32, 33) oder ein redundanzfreies Teilnetz mit der Signalverarbeitungseinheit verbunden ist,
**dadurch gekennzeichnet, daß**
- das Koppelelement (12) ein Backplane Switch mit zugeordnetem Controller (121) ist und über zumindest einen Interlink-Anschluß (A2-An) mit dem einfach angebundenen Netzknoten oder redundanzfreien Teilnetz verbunden ist,
- die Signalverarbeitungseinheit (11) eine Speichereinheit (113) aufweist, in der eine Tabelle mit Angaben zu sämtlichen mit dem Koppelelement (12) verbundenen einfach angebundenen Netzknoten (32, 33) gespeichert ist,
- Daten entsprechend High-availability Seamless Redundancy und/oder entsprechend Parallel Redundancy Protocol übertragen werden,
- mit nur einer Signalverarbeitungseinheit (11) mehrerer HSR- oder PRP-Netzsegmente (21-23; 31) gekoppelt werden,
- die Signalverarbeitungseinheit (11) über das Koppelelement (12) mit einer Mehrzahl von ersten und zweiten Sende- und Empfangseinheiten (101-106) verbunden ist, wobei jeweils eine erste Sende- und Empfangseinheit und eine dieser zugeordnete zweite Sende- und Empfangseinheit eine identische Netzadresse und einen identischen Geräteidentifikator aufweisen,
- die Signalverarbeitungseinheit (11) mit dem Koppelelement (12) zumindest über ein erstes (P1-P2) und ein zweites Anschlußpaar (I1-I2) verbunden ist,
- der Controller (121) des Koppelelements (12) für einen Betrieb von virtuellen lokalen Netzen eingerichtet wird, wobei für jeden einer ersten Sende- und Empfangseinheit (101, 103, 105) zugeordneten Anschluß (R11, R21, Rn1) sowie einen ersten Anschluß (P1) des ersten Anschlußpaars (P1-P2) jeweils ein virtuelles lokales Netz eingerichtet wird, und wobei für jeden einer zweiten Sende- und Empfangseinheit (102, 104, 106) zugeordneten Anschluß (R12, R22, Rn2) sowie einen zweiten Anschluß (P2) des ersten Anschlußpaars (P1-P2) jeweils ein virtuelles lokales Netz eingerichtet wird,
- die Signalverarbeitungseinheit (11) für sämtliche ersten und zweiten Sende- und Empfangseinheiten (101-106) anhand einer Kennung des jeweiligen virtuellen lokalen Netzes zu sendende Nachrichten parallel an die jeweilige erste oder zweite Sende- und Empfangseinheit weiterleitet und empfangene redundante Nachrichten detektiert,
- die Signalverarbeitungseinheit (11) bei einer Weiterleitung einer Nachricht aus einem ersten redundanten Teilnetz an ein zweites redundantes Teilnetz eine dem zweiten redundanten Teilnetz zugeordnete Kennung in die Nachricht einfügt und die Nachricht über einen ersten Anschluß (I1) des zweiten Anschlußpaars (I1-I2), das Koppelelement (12) sowie einen zweiten Anschluß (I2) des zweiten Anschlußpaars (I1-I2) an eine dem zweiten redundanten Teilnetz zugeordnete Redundanzbehandlungseinheit rückkoppelt,
- das Koppelelement (12) ein Speicherelement (123) umfaßt, in dem eine über das Koppelelement rückgekoppelte Nachricht zwischengespeichert wird.

13. Verfahren nach Anspruch 12,
bei dem die Signalverarbeitungseinheit (12) bei einer Weiterleitung einer Nachricht aus einem ersten redundanten Teilnetz an ein zweites redundantes Teilnetz eine dem zweiten redundanten Teilnetz zugeordnete Kennung aus einer rückgekoppelten Nachricht entfernt.

14. Verfahren nach einem der Ansprüche 12 oder 13,
bei dem von den ersten Sende- und Empfangseinheiten (101, 103, 105) empfangene Nachrichten über den ersten Anschluß (P1) des ersten Anschlußpaars (P1-P2) an die Signalverarbeitungseinheit (11) übermittelt werden, bei dem von den zweiten Sende- und Empfangseinheiten (102, 104, 106) empfangene Nachrichten über den zweiten Anschluß (P2) des ersten Anschlußpaars (P1-P2) an die Signalverarbeitungseinheit (11) übermittelt werden, bei dem an erste Sende- und Empfangseinheiten gerichtete Nachrichten über den ersten Anschluß des ersten Anschlußpaars an die Signalverarbeitungseinheit übermittelt werden, und bei dem an zweite Sende- und Empfangseinheiten gerichtete Nachrichten über den zweiten Anschluß des ersten Anschlußpaars an die Signalverarbeitungseinheit übermittelt werden.

15. Verfahren nach einem der Ansprüche 12 bis 14,
bei dem von einfach angebundenen Netzknoten (32, 33) oder redundanzfreien Teilnetzen empfangene Nachrichten über den ersten (I1) oder zweiten Anschluß (I2) des zweiten Anschlußpaars (I1-I2) an die Signalverarbeitungseinheit (11) übermittelt werden, und bei dem an einfach angebundene Netzknoten oder redundanzfreie Teilnetze gerichtete Nachrichten über den ersten oder zweiten Anschluß des zweiten Anschlußpaars an die Signalverarbeitungseinheit übermittelt werden.

16. Verfahren nach einem der Ansprüche 12 bis 15,
bei dem für jedes redundante Teilnetz (21-23; 31) eine zugeordnete Instanz (112) in der Signalverarbeitungseinheit (11) vorgesehen ist, bei dem die Signalverarbeitungseinheit eine Absenderadresse und Kennung eines virtuellen lokalen Netzes aus einer von einer ersten oder zweiten Sende- und Empfangseinheit empfangenen Nachricht ausliest, bei dem die Signalverarbeitungseinheit eine aus einer Nachricht ausgelesene Adresse und eine zugehörige Kennung eines virtuellen lokalen Netzes in einer Adreß-Instanz-Tabelle speichert, und bei dem die Signalverarbeitungseinheit eine Nachricht an eine zu einer Zieladresse zugeordnete Instanz entsprechend einem Abfrageergebnis aus der Adreß-Instanz-Tabelle weiterleitet.

17. Verfahren nach Anspruch 16,
bei dem die Signalverarbeitungseinheit (11) zusätzlich oder alternativ zu einem Auslesen einer Absenderadresse und einer Kennung eines virtuellen lokalen Netzes aus einer Nachricht eine Zuordnung zwischen Netzadresse und Kennung eines virtuellen lokalen Netzes aus einer in einem Speicherelement (123) des Koppelelements (12) gespeicherten Adreßtabelle abruft, und bei dem die Signalverarbeitungseinheit eine abgerufene Zuordnung zwischen Netzadresse und Kennung eines virtuellen lokalen Netzes in der Adreß-Instanz-Tabelle speichert.

18. Verfahren nach einem der Ansprüche 16 oder 17,
bei dem die Signalverarbeitungseinheit (11) einen Eintrag aus der Adreß-Instanz-Tabelle nach Ablauf einer vorgebbaren Gültigkeitsdauer löscht.

19. Verfahren nach einem der Ansprüche 12 bis 18,
das Koppelelement (12) mit einer Mehrzahl einfach angebundener Netzknoten (32, 33) oder redundanzfreier Teilnetze verbunden ist, wobei für den einfach angebundenen Netzknoten oder den redundanzfreien Teilnetzen zugeordnete Anschlüsse (A2-An) sowie für das zweite Anschlußpaar ein zusätzliches virtuelles lokales Netz eingerichtet wird.

20. Verfahren nach einem der Ansprüche 12 bis 19,
bei dem zueinander redundante Nachrichten durch eine einheitliche Sequenznummer gekennzeichnet werden, und bei dem in einer der Signalverarbeitungseinheit zugeordneten Speichereinheit Sequenznummern von bereits fehlerfrei empfangenen Nachrichten gespeichert werden, und bei dem die Signalverarbeitungseinheit bei Empfang einer neuen Nachricht dessen Sequenznummer auf Übereinstimmung mit einer bereits gespeicherten Sequenznummer überprüft.

## Claims

1. Communication device for a redundantly operable industrial communication network with
- at least one first transmitting and receiving unit (101, 103, 105) and one second transmitting and receiving unit (102, 104, 106), which have in each case an interface for a network connection of a redundant subnetwork, both transmitting and receiving units having an identical network address and an identical device identifier,
- a signal processing unit (11), which is connected to the first and second transmitting and receiving units and has a multiplexer unit for the parallel forwarding of messages to be sent to both transmitting units and a redundancy handling unit for processing messages received by both receiving units, the redundancy handling unit comprising a filter unit, which is set up for detecting received redundant messages,
- a coupling element (12), which is connected to the signal processing unit (11) and by way of which a singly attached network node (32, 33) or a non-redundant subnetwork is connected to the signal processing unit,
**characterized in that**
- the coupling element (12) is a backplane switch with an assigned controller (121) and is connected by way of at least one interlink terminal (A2-An) to the singly attached network node (32, 33) or non-redundant subnetwork,
the signal processing unit (11) has a memory unit (113), in which a table with details of all the singly attached network nodes (32, 33) that are connected to the coupling element (12) is stored,
- a data transmission is performed in accordance with the High-availability Seamless Redundancy and/or Parallel Redundancy Protocol,
- a coupling of multiple HSR or PRP network segments (21-23; 31) is performed with just one signal processing unit (11),
- the signal processing unit (11) is connected by way of the coupling element (12) to a plurality of first and second transmitting and receiving units (101-106), a first transmitting and receiving unit and a second transmitting and receiving unit assigned thereto having in each case an identical network address and an identical device identifier,
- the signal processing unit (11) is connected to the coupling element (12) at least by way of a first pair of terminals (P1-P2) and a second pair of terminals (I1-I2),
- the controller (121) of the coupling element (12) is set up for operating virtual local networks, a virtual local network being set up in each case for each terminal (R11, R21, Rn1) assigned to a first transmitting and receiving unit (101, 103, 105) and also a first terminal (P1) of the first pair of terminals (P1-P2), and a virtual local network being set up in each case for each terminal (R12, R22, Rn2) assigned to a second transmitting and receiving unit (102, 104, 106) and also a second terminal (P2) of the first pair of terminals (P1-P2),
- the signal processing unit (11) is set up for the parallel forwarding of messages to be sent and for the detection of received redundant messages for all the first and second transmitting and receiving units (101-106) on the basis of an identification of the respective virtual local network,
- when there is forwarding of a message from a first redundant subnetwork to a second redundant subnetwork, the signal processing unit (11) is set up for inserting an identification assigned to the second redundant subnetwork into the message and for feeding back the message by way of a first terminal (I1) of the second pair of terminals (I1-I2), the coupling element (12) and a second terminal (I2) of the second pair of terminals (I1-I2) to a redundancy handling unit assigned to the second redundant subnetwork,
- the coupling element (12) comprises a memory element (123), which is set up for buffer-storing a message fed back by way of the coupling element.

2. Communication device according to Claim 1,
in which, when there is forwarding of a message from a first redundant subnetwork to a second redundant subnetwork, the signal processing unit (12) is set up for removing an identification assigned to the second redundant subnetwork from a fed-back message.

3. Communication device according to either of Claims 1 and 2,
in which messages received by the first transmitting and receiving units (101, 103, 105) are transmitted by way of the first terminal (P1) of the first pair of terminals (P1-P2) to the signal processing unit (11), in which messages received by the second transmitting and receiving units (102, 104, 106) are transmitted by way of the second terminal (P2) of the first pair of terminals (P1-P2) to the signal processing unit (11), in which messages directed to first transmitting and receiving units are transmitted by way of the first terminal of the first pair of terminals to the signal processing unit, and in which messages directed to second transmitting and receiving units are transmitted by way of the second terminal of the first pair of terminals to the signal processing unit.

4. Communication device according to one of Claims 1 to 3,
in which messages received by singly attached network nodes (32, 33) or non-redundant subnetworks are transmitted by way of the first terminal (I1) or second terminal (I2) of the second pair of terminals (I1-I2) to the signal processing unit (11), and in which messages directed to singly attached network nodes or non-redundant subnetworks are transmitted by way of the first or second terminal of the second pair of terminals to the signal processing unit.

5. Communication device according to one of Claims 1 to 4,
in which an assigned instance (112) is provided in the signal processing unit (11) for each redundant subnetwork (21-23; 31), in which the signal processing unit is set up for reading out the sender address and an identification of a virtual local network from a message received by a first or second transmitting and receiving unit, in which the signal processing unit is set up for storing an address read out from a message and an associated identification of a virtual local network in an address instance table, and in which the signal processing unit is set up for forwarding a message to an instance assigned to a target address in accordance with the inquiry result from the address instance table.

6. Communication device according to Claim 5,
in which, in addition or as an alternative to reading out from a message, the signal processing unit (11) is set up for retrieving an assignment between a network address and an identification of a virtual local network from an address table stored in a memory element (123) of the coupling element (12), and in which the signal processing unit is set up for storing a retrieved assignment between a network address and an identification of a virtual local network in the address instance table.

7. Communication device according to either of Claims 5 and 6,
in which the signal processing unit (11) is set up for erasing an entry from the address instance table after the elapse of a predeterminable validity time.

8. Communication device according to one of Claims 1 to 7,
in which the coupling element (12) is connected to a plurality of singly attached network nodes (32, 33) or non-redundant subnetworks, an additional virtual local network being set up for terminals assigned to the singly attached network nodes or the non-redundant subnetworks and also an additional virtual local network being set up for the second pair of terminals.

9. Communication device according to one of Claims 1 to 8,
in which messages that are redundant in relation to one another are identified by a common sequence number, and in which the signal processing unit is assigned a memory unit, which is set up for storing sequence numbers of messages already received error-free, and in which the redundancy handling unit is set up for checking for an already stored sequence number when a new message is received.

10. Communication device according to one of Claims 1 to 9,
in which the coupling element (12) is a high-speed bus, and in which further singly attached network nodes (32, 33) or non-redundant subnetworks are connected to the signal processing unit (12) by way of the high-speed bus.

11. Communication device according to one of Claims 1 to 10,
in which the signal processing unit (11) is realized by means of a Field Programmable Gate Array.

12. Method for operating a communication device in a redundant industrial communication network, in which
- the communication device comprises at least one first transmitting and receiving unit (101, 103, 105) and one second transmitting and receiving unit (102, 104, 106), which have in each case an interface for a network connection of the industrial communication network, both transmitting and receiving units having an identical network address and an identical device identifier,
- connected to the first and second transmitting and receiving units is a signal processing unit (11), which forwards in parallel messages to be sent to both transmitting units and detects redundant messages received by the receiving units,
- connected to the signal processing unit (11) is a coupling element (12), by way of which a singly attached network node (32, 33) or a non-redundant subnetwork is connected to the signal processing unit,
**characterized in that**
- the coupling element (12) is a backplane switch with an assigned controller (121) and is connected by way of at least one interlink terminal (A2-An) to the singly attached network node or non-redundant subnetwork,
- the signal processing unit (11) has a memory unit (113), in which a table with details of all the singly attached network nodes (32, 33) that are connected to the coupling element (12) is stored,
- data are transmitted in accordance with the High-availability Seamless Redundancy and/or Parallel Redundancy Protocol,
- multiple HSR or PRP network segments (21-23; 31) are coupled with just one signal processing unit (11),
- the signal processing unit (11) is connected by way of the coupling element (12) to a plurality of first and second transmitting and receiving units (101-106), a first transmitting and receiving unit and a second transmitting and receiving unit assigned thereto having in each case an identical network address and an identical device identifier,
- the signal processing unit (11) is connected to the coupling element (12) at least by way of a first pair of terminals (P1-P2) and a second pair of terminals (I1-I2),
- the controller (121) of the coupling element (12) is set up for operating virtual local networks, a virtual local network being set up in each case for each terminal (R11, R21, Rn1) assigned to a first transmitting and receiving unit (101, 103, 105) and also a first terminal (P1) of the first pair of terminals (P1-P2), and a virtual local network being set up in each case for each terminal (R12, R22, Rn2) assigned to a second transmitting and receiving unit (102, 104, 106) and also a second terminal (P2) of the first pair of terminals (P1-P2),
the signal processing unit (11) forwards in parallel messages to be sent to the respective first or second transmitting and receiving unit and detects received redundant messages for all the first and second transmitting and receiving units (101-106) on the basis of an identification of the respective virtual local network,
- when there is forwarding of a message from a first redundant subnetwork to a second redundant subnetwork, the signal processing unit (11) inserts an identification assigned to the second redundant subnetwork into the message and feeds back the message by way of a first terminal (I1) of the second pair of terminals (I1-I2), the coupling element (12) and a second terminal (I2) of the second pair of terminals (I1-I2) to a redundancy handling unit assigned to the second redundant subnetwork,
- the coupling element (12) comprises a memory element (123), in which a message fed back by way of the coupling element is buffer-stored.

13. Method according to Claim 12,
in which, when there is forwarding of a message from a first redundant subnetwork to a second redundant subnetwork, the signal processing unit (12) removes an identification assigned to the second redundant subnetwork from a fed-back message.

14. Method according to either of Claims 12 and 13,
in which messages received by the first transmitting and receiving units (101, 103, 105) are transmitted by way of the first terminal (P1) of the first pair of terminals (P1-P2) to the signal processing unit (11), in which messages received by the second transmitting and receiving units (102, 104, 106) are transmitted by way of the second terminal (P2) of the first pair of terminals (P1-P2) to the signal processing unit (11), in which messages directed to first transmitting and receiving units are transmitted by way of the first terminal of the first pair of terminals to the signal processing unit, and in which messages directed to second transmitting and receiving units are transmitted by way of the second terminal of the first pair of terminals to the signal processing unit.

15. Method according to one of Claims 12 to 14,
in which messages received by singly attached network nodes (32, 33) or non-redundant subnetworks are transmitted by way of the first terminal (I1) or second terminal (I2) of the second pair of terminals (I1-I2) to the signal processing unit (11), and in which messages directed to singly attached network nodes or non-redundant subnetworks are transmitted by way of the first or second terminal of the second pair of terminals to the signal processing unit.

16. Method according to one of Claims 12 to 15,
in which an assigned instance (112) is provided in the signal processing unit (11) for each redundant subnetwork (21-23; 31), in which the signal processing unit reads out a sender address and an identification of a virtual local network from a message received by a first or second transmitting and receiving unit, in which the signal processing unit stores an address read out from a message and an associated identification of a virtual local network in an address instance table, and in which the signal processing unit forwards a message to an instance assigned to a target address in accordance with an inquiry result from the address instance table.

17. Method according to Claim 16,
in which, in addition or as an alternative to reading out a sender address and an identification of a virtual local network from a message, the signal processing unit (11) retrieves an assignment between a network address and an identification of a virtual local network from an address table stored in a memory element (123) of the coupling element (12), and in which the signal processing unit stores a retrieved assignment between a network address and an identification of a virtual local network in the address instance table.

18. Method according to either of Claims 16 and 17,
in which the signal processing unit (11) erases an entry from the address instance table after the elapse of a predeterminable validity time.

19. Method according to one of Claims 12 to 18,
in which the coupling element (12) is connected to a plurality of singly attached network nodes (32, 33) or non-redundant subnetworks, an additional virtual local network being set up for terminals (A2-An) assigned to the singly attached network nodes or the non-redundant subnetworks and also an additional virtual local network being set up for the second pair of terminals.

20. Method according to one of Claims 12 to 19,
in which messages that are redundant in relation to one another are identified by a common sequence number, and in which sequence numbers of messages already received error-free are stored in a memory unit assigned to the signal processing unit, and in which, when a new message is received, the signal processing unit checks its sequence number for coinciding with an already stored sequence number.

## Revendications

1. Appareil de communication, pour un réseau de communication industriel pouvant fonctionner de manière redondante et comprenant
- au moins une première (101, 103, 105) et une deuxième (102, 104, 106), unités d'émission et de réception, qui ont chacune une interface pour une liaison d'un sous-réseau redondant, les deux unités d'émission et de réception ayant une adresse de réseau identique et un identificateur d'appareil identique,
- une unité (11) de traitement du signal, qui est reliée à la première et à la deuxième unités d'émission et de réception et qui a une unité de multiplexeur, pour l'acheminement en parallèle de messages à envoyer aux deux unités d'émission, et une unité de traitement de redondance, pour le traitement de messages reçus par les deux unités de réception, dans lequel l'unité de traitement de redondance comprend une unité de filtrage, qui est conçue pour détecter des messages redondants qui ont été reçus,
- un élément (12) de couplage, qui est relié à l'unité (11) de traitement du signal et par lequel un noeud (32, 33) de réseau, raccordé de manière simple, ou un sous-réseau sans redondance est relié à l'unité de traitement du signal,
**caractérisé en ce que**
- l'élément (12) de couplage est un backplane switch, à unité (121) de commande associée, et est relié au noeud (32, 33) de réseau, raccordé de manière simple ou au sous-réseau sans redondance, par au moins un accès (A2 à An) interlink,
- l'unité (11) de traitement du signal a une unité (113) de mémoire, dans laquelle est mémorisée une table ayant des indications sur l'ensemble des noeuds (32, 33) de réseau, raccordés de manière simple et reliés à l'élément (12) de couplage,
- une transmission de données s'effectue conformément, à high availability seamless redundancy et/ou conformément à parallel redundancy protocol,
- un couplage de plusieurs segments (21 à 23; 31) de réseau HSR ou PRP s'effectue avec seulement une unité (11) de traitement du signal,
- l'unité (11) de traitement du signal est reliée à une pluralité de premières et de deuxièmes unités (101 à 106) d'émission et de réception par l'élément (12) de couplage, chaque première unité d'émission et de réception et une deuxième unité d'émission et de réception, qui lui est associée, ayant une adresse de réseau identique et un identificateur d'appareil identique,
- l'unité (11) de traitement du signal est reliée à l'élément (12) de couplage, au moins par une première (P1 -P2 ) et une deuxième paires (I1-I2) d'accès,
- l'unité (121) de commande de l'élément (12) de couplage est conçue pour faire fonctionner des réseaux locaux virtuels, dans lequel respectivement un réseau local virtuel est conçu pour chaque accès (R11, R21, Rn1) associé à une première unité (101, 103, 105) d'émission et de réception, ainsi que pour un premier accès (P1) de la première paire (P1-P2) d'accès, et dans lequel respectivement un réseau local virtuel est conçu pour chaque accès (R12, R22, Rn2) associé à une deuxième unité (102, 104, 106) d'émission et de réception, ainsi que pour un deuxième accès (P2) de la première paire (P1-P2) d'accès,
- l'unité (11) de traitement du signal est conçue pour l'acheminement en parallèle de messages à envoyer et pour la détection de messages redondants reçus pour l'ensemble des premières et deuxième unités (101 à 106) d'émission et de réception à l'aide d'une caractérisation du réseau local virtuel respectif,
- l'unité (11) de traitement du signal est, lorsqu'un message est acheminé d'un premier sous-réseau redondant à un deuxième sous-réseau redondant, conçue pour l'insertion d'une caractérisation, associée au deuxième sous-réseau redondant, dans le message, ainsi que pour un retour du message, par un premier accès (I1) de la deuxième paire (Il -I2) d'accès, par l'élément (12) de couplage et par un deuxième accès (I2) de la deuxième paire (I1-I2) d'accès, à une unité de traitement de redondance associée au deuxième sous-réseau redondant,
- l'élément (12) de couplage comprend un élément (123) de mémoire, qui est conçu pour mémoriser intermédiairement un message retourné par l'élément de couplage.

2. Appareil de communication suivant la revendication 1,
dans lequel l'unité (12) de traitement du signal est, lorsqu'un message est acheminé d'un premier sous-réseau redondant à un deuxième sous-réseau redondant, conçue pour retirer une caractérisation associée au deuxième sous-réseau redondant d'un message retourné.

3. Appareil de communication suivant l'une des revendications 1 ou 2,
dans lequel des messages reçus par les premières unités (101, 103, 105) d'émission et de réception sont transmis à l'unité (11) de traitement du signal par le premier accès (P1) de la première paire (P1-P2) d'accès, dans lequel des messages reçus par les deuxièmes unités (102, 104, 106) d'émission et de réception sont transmis à l'unité (11) de traitement du signal par le deuxième accès (P2) de la première paire (P1-P2 ) d'accès, dans lequel des messages dirigés vers des premières unités d'émission et de réception sont transmis à l'unité de traitement du signal par le premier accès de la première paire d'accès, et dans lequel des messages dirigés vers des deuxièmes unités d'émission et de réception sont transmis à l'unité de traitement du signal par le deuxième accès de la première paire d'accès.

4. Appareil de communication suivant l'une des revendications 1 à 3,
dans lequel des messages reçus de noeuds (32, 33) de réseau, raccordés simplement, ou de sous-réseaux sans redondance, sont transmis à l'unité (11) de traitement du signal par le premier accès (I1) ou le deuxième accès (I2) de la deuxième paire (I1 -I2) d'accès, et dans lequel des messages dirigés vers des noeuds de réseau, raccordés simplement, ou des sous-réseaux sans redondance sont transmis à l'unité de traitement du signal par le premier accès ou le deuxième accès de la deuxième paire d'accès.

5. Appareil de communication suivant l'une des revendications 1 à 4,
dans lequel il est prévu, pour chaque sous-réseau (21 à 23; 31) redondant, une instance (112) associée dans l'unité (11) de traitement du signal, dans lequel l'unité de traitement du signal est conçue pour lire une adresse d'envoi et une caractérisation d'un réseau local virtuel dans un message reçu d'une première ou d'une deuxième unité d'émission et de réception, dans lequel l'unité de traitement du signal est conçue pour mémoriser, dans une table d'instance d'adresse, une adresse lue dans un message et une caractérisation associée d'un réseau local virtuel, et dans lequel l'unité de traitement du signal est conçue pour acheminer un message vers une instance, associée à une adresse cible, conformément à un résultat d'interrogation dans la table d'instance d'adresse.

6. Appareil de communication suivant la revendication 5,
dans lequel l'unité (11) de traitement du signal est conçue, en plus ou en variante à une lecture dans un message, pour une recherche d'une association entre des adresses de réseau et une caractérisation d'un réseau local virtuel dans une table d'adresse mémorisée dans un élément (123) de mémoire de l'élément (12) de couplage, et dans lequel l'unité de traitement du signal est conçue pour mémoriser dans la table d'instance d'adresse une association recherchée entre des adresses de réseau et une caractérisation d'un réseau local virtuel.

7. Appareil de communication suivant l'une des revendications 5 ou 6,
dans lequel l'unité (11) de traitement du signal est conçue pour, après expiration d'une durée de validité pouvant être donnée à l'avance, effacer un enregistrement dans la table d'instance d'adresse.

8. Appareil de communication suivant l'une des revendications 1 à 7,
dans lequel l'élément (12) de couplage est relié à une pluralité de noeuds (32, 33) de réseau, raccordés simplement, ou de sous-réseaux sans redondance, dans lequel un réseau local virtuel supplémentaire est conçu pour les accès associés aux noeuds de réseau, raccordés simplement, ou aux sous-réseaux sans redondance, ainsi que pour la deuxième paire d'accès.

9. Appareil de communication suivant l'une des revendications 1 à 8,
dans lequel des messages redondants les uns par rapport aux autres sont **caractérisés par** un numéro de séquence unitaire, et dans lequel à l'unité de traitement du signal est associée une unité de mémoire, qui est conçue pour mémoriser les numéros de séquence de messages reçus déjà sans erreur, et dans lequel l'unité de traitement de redondance est conçue pour contrôler un numéro de séquence déjà mémorisé à la réception d'un message nouveau.

10. Appareil de communication suivant l'une des revendications 1 à 9,
dans lequel l'élément (12) de couplage est un bus à grande vitesse, et dans lequel, par le bus à grande vitesse, d'autres noeuds (32, 33) de réseau, raccordés simplement, ou des sous-réseaux sans redondance sont reliés à l'unité (12) de traitement du signal.

11. Appareil de communication suivant l'une des revendications 1 à 10,
dans lequel l'unité (11) de traitement du signal est réalisée au moyen d'un field programmable gate array.

12. Procédé pour faire fonctionner un appareil de communication dans un réseau de communication industriel redondant, dans lequel
- l'appareil de communication comprend au moins une première (101, 103, 105) et une deuxième (102, 104, 106), unités d'émission et de réception, qui ont chacune une interface pour une liaison d'un sous-réseau redondant, les deux unités d'émission et de réception ayant une adresse de réseau identique et un identificateur d'appareil identique,
- à la première et à la deuxième unité d'émission et de réception est reliée une unité (11) de traitement du signal, qui achemine des messages à envoyer en parallèle aux deux unités d'émission et détecte des messages redondants reçus par les unités de réception,
- à l'unité (11) de traitement du signal est reliée un élément (12) de couplage, par lequel un noeud (32, 33) de réseau, raccordé simplement, ou un sous-réseau sans redondance est relié à l'unité de traitement du signal,
**caractérisé en ce que**
- l'élément (12) de couplage est un backplane switch, à unité (121) de commande associée, et est relié aux noeuds (32, 33) de réseau, raccordés, de manière simple, ou au sous-réseau sans redondance, par au moins un accès (A2 à An) interlink,
- l'unité (11) de traitement du signal a une unité (113) de mémoire, dans laquelle est mémorisée une table ayant des indications sur l'ensemble des noeuds (32, 33) de réseau, raccordés de manière simple et reliés à l'élément (12) de couplage,
- on transmet des données conformément à high availability seamless redundancy et/ou conformément à parallel redundancy protocol,
- on couple plusieurs segments (21 à 23; 31) de réseau HSR ou PRP à seulement une unité (11) de traitement du signal,
- l'unité (11) de traitement du signal est reliée à une pluralité de premières et de deuxièmes unités (101 à 106) d'émission et de réception par l'élément (12) de couplage, chaque première unité d'émission et de réception et une deuxième unité d'émission et de réception, qui lui est associée, ayant une adresse de réseau identique et un identificateur d'appareil identique,
- l'unité (11) de traitement du signal est reliée à l'élément (12) de couplage, au moins par une première (P1-P2) et une deuxième paires (I1-I2) d'accès,
- l'unité (121) de commande de l'élément (12) de couplage est conçue pour faire fonctionner des réseaux locaux virtuels, dans lequel, respectivement un réseau local virtuel est conçu pour chaque accès, (R11, R21, Rn1) associé à une première unité (101, 103, 105) d'émission et de réception, ainsi que pour un premier accès (P1) de la première paire (P1-P2) d'accès, et dans lequel respectivement un réseau local virtuel est conçu pour chaque accès (R12, R22, Rn2) associé à une deuxième unité (102, 104, 106) d'émission et de réception, ainsi que pour un deuxième accès (P2) de la première paire (P1-P2) d'accès,
- l'unité (11) de traitement du signal achemine vers la première ou la deuxième unité d'émission et de réception, en parallèle, des messages à envoyer pour l'ensemble des premières et deuxièmes unités (101 à 106) d'émission et de réception à l'aide d'une caractérisation du réseau local virtuel respectif et détecte de messages redondants reçus,
- l'unité (11) de traitement du signal ajoute au message, lors d'un acheminement d'un message d'un premier sous-réseau redondant à un deuxième sous-réseau redondant, une caractérisation associée au deuxième sous-réseau redondant et retourne le message à une unité de traitement de redondance associée au deuxième sous-réseau redondant, en passant par un premier accès (I1) de la deuxième paire (I1-I2) d'accès, par l'élément (12) de couplage, ainsi par un deuxième accès (I2) de la deuxième paire (I1-I2) d'accès,
- l'élément (12) de couplage comprend un élément (123) de mémoire, dans lequel on met en mémoire tampon un message retourné par l'intermédiaire de l'élément de couplage.

13. Procédé suivant la revendication 12,
dans lequel l'unité (12) de traitement du signal élimine d'un message retourné, lorsqu'un message est acheminé d'un premier sous-réseau redondant à un deuxième sous-réseau redondant, une caractérisation associée au deuxième sous-réseau redondant.

14. Procédé suivant l'une des revendications 12 ou 13,
dans lequel des messages reçus par les premières unités (101, 103, 105) d'émission et de réception sont transmis à l'unité (11) de traitement du signal par le premier accès (P1) de la première paire (P1-P2) d'accès, dans lequel des messages reçus par les deuxièmes unités (102, 104, 106) d'émission et de réception sont transmis à l'unité (11) de traitement du signal par le deuxième accès (P2) de la première paire (P1-P2) d'accès, dans lequel des messages dirigés vers des premières unités d'émission et de réception sont transmis à l'unité de traitement du signal par le premier accès de la première paire d'accès, et dans lequel des messages dirigés vers des deuxièmes unités d'émission et de réception sont transmis à l'unité de traitement du signal par le deuxième accès de la première paire d'accès.

15. Procédé suivant l'une des revendications 12 à 14,
dans lequel des messages reçus de noeuds (32, 33) de réseau, raccordés simplement, ou de sous-réseaux sans redondance sont transmis à l'unité (11) de traitement du signal par le premier accès (I1) ou le deuxième accès (I2) de la deuxième paire (I1 -I2) d'accès, et dans lequel des messages dirigés vers des noeuds de réseau, raccordés simplement, ou des sous-réseaux sans redondance sont transmis à l'unité de traitement du signal par le premier accès ou le deuxième accès de la deuxième paire d'accès.

16. Procédé suivant l'une des revendications 12 à 15,
dans lequel pour chaque sous-réseau (21 à 23; 31) redondant, il est prévu une instance (112) associée dans l'unité (11) de traitement du signal, dans lequel l'unité de traitement du signal lit une adresse d'envoi et une caractérisation d'un réseau local virtuel dans un message reçu d'une première ou deuxième unité d'émission et de réception, dans lequel l'unité de traitement du signal mémorise, dans une table d'instance d'adresse, une adresse lue dans un message et une caractérisation associée d'un réseau local virtuel, et dans lequel l'unité de traitement du signal achemine un message à une instance, associée à une adresse cible, conformément à un résultat d'interrogation dans la table d'instance d'adresse.

17. Procédé suivant la revendication 16,
dans lequel l'unité (11) de traitement du signal recherche, dans une table d'adresse mémorisée dans un élément (123) de mémoire de l'élément (12) de couplage, supplémentairement ou en variante à une lecture d'une adresse d'envoi et d'une caractérisation d'un réseau local virtuel dans un message, une association entre une adresse de réseau et une caractérisation d'un réseau local virtuel, et dans lequel l'unité de traitement du signal mémorise dans la table d'instance d'adresse une association recherchée entre une adresse de réseau et une caractérisation d'un réseau local virtuel.

18. Procédé suivant l'une des revendications 16 ou 17,
dans lequel l'unité (11) de traitement du signal efface un enregistrement dans la table d'instance d'adresse après écoulement d'une durée de validité pouvant être donnée à l'avance.

19. Procédé suivant l'une des revendications 12 à 18,
dans lequel l'élément (12) de couplage est relié à une pluralité de noeuds (32, 33) de réseau, raccordés simplement, ou de sous-réseaux sans redondance, dans lequel un réseau local virtuel supplémentaire est conçu pour les accès (A2 à An) associés aux noeuds de réseau, raccordés simplement, ou aux sous-réseaux sans redondance, ainsi que pour la deuxième paire d'accès.

20. Procédé suivant l'une des revendications 12 à 19,
dans lequel des messages redondants les uns par rapport aux autres sont **caractérisés par** un numéro de séquence unitaire, et dans lequel, dans une unité de mémoire associée à l'unité de traitement du signal, on mémorise des numéros de séquence de messages reçus déjà sans erreur, et dans lequel l'unité de traitement du signal contrôle à la réception d'un message nouveau son numéro de séquence, sur le point de savoir s'il coïncide avec un numéro de séquence déjà mémorisé.
